# EUROPEAN PATENT SPECIFICATION

(11) **EP 2 033 877 B1**
(45) Date of publication and mention of the grant of the patent: **27.10.2010**
(21) Application number: 07115917.2
(22) Date of filing: 07.09.2007
(51) Int. Cl.: B62D 21/15

(54) **Beam structure in a vehicle**
Trägerstruktur in einem Fahrzeug
Structure de poutre déformable pour véhicule

(43) Date of publication of application: 11.03.2009
(73) Proprietor: Ford Global Technologies, LLC, Dearborn, MI 48126 (US)
(72) Inventor: Ljungquist, Henrik, SE-423 36 Torslanda (SE); Fermer, Mikael, SE-433 49 Partille (SE); Hasselblad, Harald, SE-431 59 Mölndal (SE); Stoddart, Tom, SE-411 34 Göteborg (SE)
(74) Representative: VALEA AB

(56) References cited:
- WO-A-01/85527
- WO-A-97/14585
- US-B1- 6 588 830

## Description

### TECHNICAL FIELD

The present invention relates to a beam structure in a vehicle for providing a controlled deformation during a collision and a method for using the beam structure.

### BACKGROUND OF THE INVENTION

Beam structures are used for a number of different applications in vehicles, for example, as the front side members in a passenger vehicle chassis, and are thus components whose design crucially affects the crash safety of the vehicle. In attempting to achieve high crash safety, it has normally been striven for, by a controlled crash sequence, to force as far as possible the elements in the structure to be deformed in the most energy absorbing manner and with an optimum intrusion distance.

Generally for a vehicle there are two tests which frequently are used to evaluate collisions and the subsequent deformation of the beam structure. The first is a front collision test in which the beam structure is evaluated for a more or less symmetrical frontal collision. The second test is an off-set collision test, i.e. a collision with a vehicle or object which strikes the front of the vehicle but essentially to one side of the longitudinal center-plane of the vehicle. Depending on which collision situation that occurs, a safe beam structure requires different properties.

In an offset collision, the deformation beam structure requires great rigidity, since the entire, or most, deformation energy must be absorbed by only a part of the deformation beam structure. In a full frontal collision, the deformation energy is usually distributed between two deformable side members, and the optimum absorption is obtained in this case by reducing the rigidity of the beams. In both cases it is desirable to have a maximum deformation distance, so that the retardation of the vehicle is as slow as possible. The rigidity of the beams dictates the deformation sequence and the energy-absorbing capacity which the deformation structure will absorb. Generally a crumple deformation of a beam will absorb a high amount of energy during a collision and permit a low intrusion of the colliding object into the vehicle. A buckle deformation of a beam will generally absorb a relatively small amount of energy and permit for a longer intrusion of the colliding object into the vehicle.

However, regardless of the type of deformation, it remains important to minimize the negative crash effect on the passengers. The distance by which a vehicle is permitted to deform before non-deformable parts intrude into the passengers cabin i.e. the deformation distance, should be kept as long as possible. Therefore even at a low speed, the impact of a collision may be severe for the passengers if the retardation of the vehicle is very fast and the deformation distance is very short. In the same way, a collision at a high speed may be relatively harmless if the retardation is relatively slow and the deformation distance is relatively long. It is easy to see that these different collision situations require totally different properties of the beam structure in a vehicle. There have been attempts at providing a solution to this problem by providing active beam structures.

Normally, the beam structure in a vehicle is regarded as a passive safety system where it is primarily the geometric shape of the box-shaped beams which, by virtue of their energy-absorbing capacity, determine the collision safety. It is, however, known to arrange an 'active" beam structure in a vehicle, i.e. a system where a collision triggers an activity which makes the beam system perform in a manner exceeding its normal mechanical limits. Such an active beam arrangement is known, e.g. by US 4 050 537. Here, an explosive charge is used to change, in a collision, the cross section of a box beam in such a manner that its rigidity, and thus its energy-absorbing capacity, increases.

In the patent publication of WO 98/22327 a beam structure is described wherein each beam is coordinated with an individual retardation sensor, each disposed to send an individual retardation-dependent signal to a control unit. The control unit compares the signals and activates the means to change the rigidity of the beams depending on the difference between the signals from the retardation sensors. The principle behind the described invention is an idea of dimensioning the beams for a certain collision situation requiring certain rigidity. The rigidity of the beams is changed for collision situations in which another rigidity is desirable.

In WO 98/22327 it is described that; two C-shaped beams which have been riveted together, so as to form a substantially hollow beam, comprises means by which the rigidity can be altered. The means by which the rigidity can be altered includes rivets with pyrotechnical charges which after firing will disrupt the rivets and thereby permit the hollow beam to split and deform so as to absorb the impact energy from the collision in a desired predetermined manner. Another solution which is described is to locate the pyrotechnical charges directly in the hull of the hollow beam. After detonation of the pyrotechnical charges, small holes are formed in the beam which decreases the rigidity of the beam. However, due to the placement of the pyrotechnical charges, such solution may provide for an unpredictable deformation of the beam structure. For example, the pyrotechnical charges may disrupt more than what was intended, leading to a greater loss in rigidity of the beam and therefore unpredictable deformation. As has been described, a controlled deformation of a beam structure is the key to a collision safe vehicle.

A Similar solution as described in WO 98/22327 is provided in WO 01/85527 which discloses a beam structure for a vehicle having a system providing a controllable deformation according to the preamble features of claim 1. The system utilizes explosive charges or gas generators to change the rigidity of the beam structure by either increase or decrease the rigidity of the beam. This solution suffers from the same drawbacks as the solution disclosed in WO 98/22327 namely the unpredictability when using explosives to provide weak points in a beam structure of a vehicle for a controlled deformation.

### SUMMARY OF THE INVENTION

It is an object of the present invention to at least partly solve the above mentioned problems. The mentioned problems are at least partly solved by a beam structure in a vehicle for providing a controlled deformation during a collision in which the beam structure comprises at least one deformable beam comprising a longitudinal axis A. The beam structure is further provided with means for changing the rigidity of the at least one deformable beam at at least one point along said longitudinal axis A in response to a signal from a collision sensor system. Additionally the deformable beam comprises at least one weak point at which said deformable beam can deform along a deformation direction D upon collision. The means for changing the rigidity comprises a support device arranged so as to prevent said deformable beam from deforming in said deformation direction D at said weak point. The rigidity of the deformable beam is changed by means of disabling the support device so that the deformable beam can deform at the weak point during a collision. The present invention provides for an exceptionally accurate arrangement which can be used to change the rigidity of a deformable beam in a very controllable way during a vehicles collision. It further minimizes the negative effects from a collision on the passengers since the controlled deformation will substantially always maximize the deformation distance, independently of which type of collision that occur. It will further permit other parts of the vehicle, such as a subframe, an engine hood, the shotgun, etc, to absorb energy as usual after the support device has been disabled.

In one embodiment of the present invention, the support device is attached to the deformable beam with at least one attachment point. Preferably, the support device is attached to the deformable beam on at least a first and a second attachment point, wherein the weak point is arranged between the first and second attachment point. This arrangement has been found to be both sturdy and simple to manufacture.

According to an embodiment of the present invention, the means for at least partly disabling the support device comprises detachment means arranged at the first and/or the second attachment point. The detachment means may comprise chemical, electrical, mechanical and/or thermal means. Examples of such means are pyrotechnical charges, which have been proven to be efficient and reliable means, electromagnetic couplings, expanding pipes, turnable fastening means, glue which can change its adhesive properties depending on heat exposure and liquid nitrogen which can be applied to an area in order to make it brittle and thereby less rigid. All of these different examples have different advantages.

In one embodiment of the present invention, the at least one pyrotechnical charge is arranged between the deformable beam and the supporting device. One benefit of this embodiment is when using e.g. one or several parts of the engine as a supporting device; the parts themselves do not need to be modified. The pyrotechnical charge may however also be arranged on the supporting device. This can be advantageous when minimum risk of damaging the deformable beam is desirable. As an alternative, the pyrotechnical charge, or any other means for detachment, can be positioned in the weak point, as long as the weak point so permits.

Mainly there are two different ways of preventing the deformable beam from deforming in the deformation direction. The support device can be positioned on the deformable beam, on a side opposite to the deformation direction D. Usually this requires that the supporting device is fastened directly or indirectly to the deformable beam, so as to prevent the deformation beam from deforming in the deformation direction D. Preferably such an embodiment comprises fastening means in order to firmly hold the supporting device on the deformable beam. Another way is to position the supporting device to intersect the deformation direction D, so as to prevent the deformation beam from deforming in the deformation direction D. This type of configuration would dispense of the need for manipulating with the beam structure itself.

The deformation direction D can be substantially perpendicular to the longitudinal axis A This is generally the case when the deformation is a buckle or a bend, however, it is within the boundaries of the present invention that the deformation is a crumple and that the deformation direction is substantially parallel with the longitudinal axis A.

In an embodiment of the present invention, the weak point can comprise at least one of the following types of notches; an embossing, a hole, a reduction in cross section of the deformable beam or combinations thereof.

In an embodiment of the present invention, the supporting device is not a fixed item fastened to the deformable beam, but a movable support beam, which is separate from the deformable beam. The movable support beam can be operated between a first and a second position. When the movable support beam is in the fist position, the deformable beam is effectively prevented from deforming. When the movable support beam is in the second position, the deformable beam is substantially permitted to deform. The movable support beam can be moved by means of an electrical motor connected to the movable support beam. One main advantage is that the supporting device can be moved back and forth between the two different positions. This can be of great use if a collision is imminent but later avoided. The movable support beam can also be moved by means of a pyrotechnical charge, although such embodiment is more appropriate for moving the movable beam in one direction only once.

The support device can consist of one single item or it can comprise several different items. For instance, the support device can be a single object such as a part of an engine, a metal sheet or a metal bar. It is however also within the boundaries of the present invention that the supporting device is a plurality of interconnected vehicle parts which together can support the deformable beam.

The present invention also relates to a vehicle comprising the above described beam structure, in all its aspects. Such a vehicle preferably comprises at least two deformable beams as described above. Preferably the beam structure is a front beam structure of the vehicle, which preferably is a car. Further, the deformable beam is preferably a side member of the front beam structure. The beam structure may however also be a transverse beam or a crossmember such as a x member dash or the like.

The present invention also relates to a method for controlling a deformation during a collision with a vehicle, the vehicle comprising the above described beam structure. The method comprises the steps of;
a) detecting a collision or an imminent collision,
b) determining the character of the detected collision, and
c) dependent upon the character in (b), disabling the support device so that the rigidity of the deformable beam is changed.

The method provides a very accurate way of controlling the deformation of a deformable beam during a collision and thereby also controlling the deformation of a vehicle during a collision. The method may additionally comprise the step of determining the severity of the collision step, with such a step preferably being performed in the (b) step. The support device can further be disabled at a determined time after the collision or the imminent collision has been detected. The determined time may be determined after the collision or be a predetermined time set before the collision. Additionally, the method may also involve taking into account other parameters before step c), such parameters may be; type of powertrain of the vehicle, the vehicles weight, the speed of the vehicle, the delta speed of the vehicle, the passengers seat position, the driving direction of the vehicle, passenger information such as weight of the passenger(s), status of safety belts (e.g. used or not used).

The method may further comprise the step of determining the severity of the collision and in that step c) further depends on the severity determined in step b). By means of e.g. the vehicle computer and at least one sensor, the support device can be disabled dependent on one or several of different parameters. Such parameters may be except for those mentioned above, e.g. a certain point in time after the collision has been detected, a determined level of retardation, a determined delta speed of said vehicle, a determined intrusion distance of the colliding object, a determined available deformation distance. The support device may further be disabled dependent on a combination of at least two of the parameters mentioned above, i.e. of at least two different parameters.

### BRIEF DESCRIPTION OF THE DRAWINGS

The invention will be described in the following by way of example only and with reference to the attached drawings in which;
Figure 1 shows a schematic drawing of a vehicle comprising a deformable beam in the form of a side member, according to the present invention;
Figure 2 shows a front beam structure for use in a vehicle;
Figure 3-6 shows different embodiments of supporting devices, according to the present invention;
Figure 7 shows a deformable beam comprising a weak point in the form of an embossing;
Figure 8 shows a flow chart of the methodology employed in the present invention.

### DEFINITIONS

The term "passenger" is meant to include any person present in the passenger compartment, hence by this definition; a driver is also a passenger.

### DETAILED DESCRIPTION OF PREFERRED EMBODIMENTS

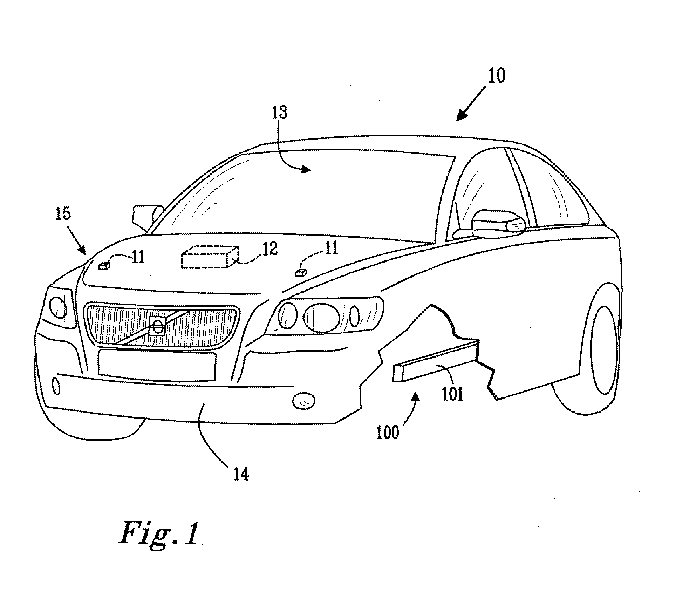

Figure 1 shows a vehicle 10, in the form of a car, comprising a beam structure 100 which during collision is intended to deform so as to absorb the collision energy. The vehicle is arranged with at least one sensor 11 of a collision sensor system. The sensors are connected to a computer 12 on the vehicle. During collision, or just before collision, the sensors 11, or any other collision sensor system in the vehicle, reports to the vehicle computer 12 of the ongoing or imminent collision. The vehicle computer 12 analyses the input and thereafter initiates appropriate counter measures depending on the result of the analysis. One such counter measure can be a modification of the rigidity of the beam structure 100 so that the collision energy is effectively absorbed at the right moment during the collision. The vehicle comprises a passenger compartment 13 which comprises seats for a driver and a plurality of additional passengers. A bumper 14 is arranged at the front 15 of the vehicle.

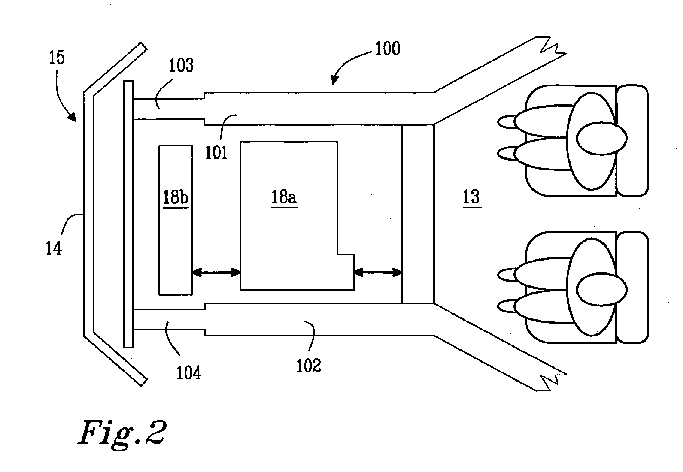

Generally the vehicle 10 and its beam structure 100 will comprise at least a first and a second deformation beam 101, 102, as shown in figure 2 from above. The first and the second deformation beams 101, 102 are arranged substantially parallel and longitudinal with the vehicle 10, extending from the passenger compartment 13 to the proximity of the front of the vehicle 15. In the shown embodiment, the first and the second deformable beam 101, 102 extend along the sides of the vehicle, inwardly of the wheel house (not shown). An engine, formed by engine parts 18a and 18b is arranged between the bumper 14 and the passenger compartment 13.

A first and a second crash box 103, 104 are arranged on the first and the second deformation beam 101, 102 between the first and the second deformation beam 101, 102 and the bumper 14. In low speed collisions, the first and the second crash box 103, 104 are adapted to brace a majority of the impact during collision in the longitudinal axis by crumpling so that a minimum amount of damage to the vehicle is sustained. This is because the reparation cost is intended to be as low as possible for the owner of the vehicle. However, in case of a high speed collision, the first and second deformable beams 101, 102 are intended to brace a majority of the impact of the collision so that a minimum of damage is imparted to the driver and/or the passengers. The reparation cost is, in this kind of a collision, not a priority. The available deformation distance is indicated by the arrows between the engine parts 18a and 18b. The deformation distance is the distance which the vehicle can be deformed without intrusion of objects in the passenger compartment 13.

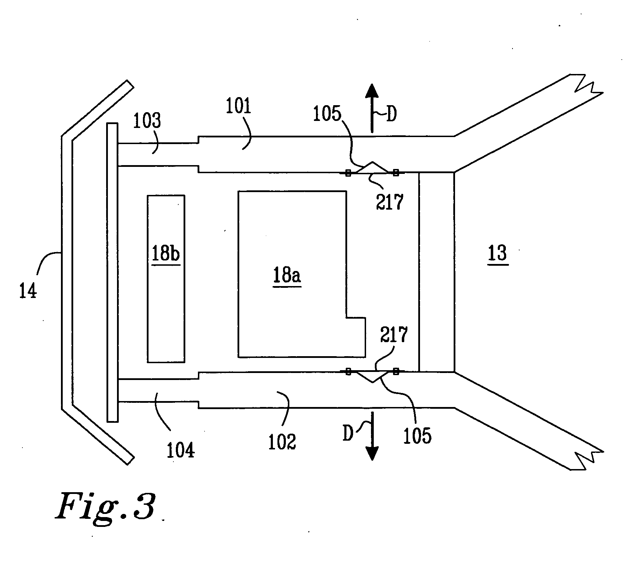

Figure 3 shows the same beam structure as in figure 2 according to the present invention. The beam structure 100 comprises a first and a second deformable beam 101, 102 each comprising a weak point in the form of a deformation notch 105. The deformation notch 105 will during collision promote the deformable beam 101 to deform along a deformation direction D. A support device 217 is attached to each of the deformable beams 101, 102 at a first and a second attachment point. During a collision or in a collision which is determined by the vehicle computer as a high risk collision, the support device can be disabled at an appropriate time, so that the deformation distance can be maximized, independently of collision type or collision severity.

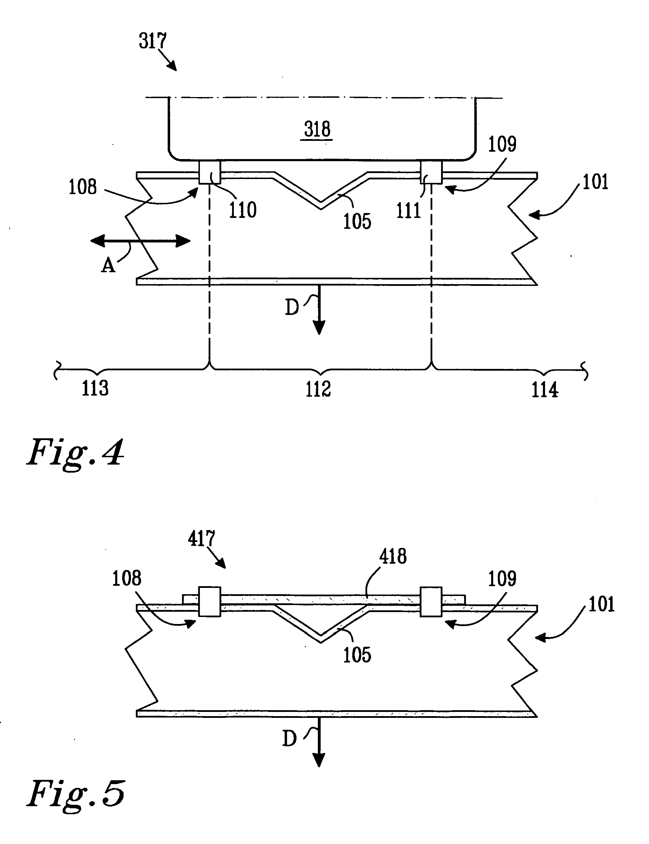

Turning to figure 4, figure 4 shows a part of a deformable beam 101, according to the present invention, having a longitudinal axis A, comprising a weak point in the form of a deformation notch 105. In this embodiment, the deformable beam id arranged to form a buckle deformation. The deformation direction D is, in the shown embodiment of the present invention, substantially perpendicular to the longitudinal axis A of the deformable beam 101. A support device 317 in the form of a part of an engine 318 is attached to the deformable beam 101 at a first and a second attachment point 108, 109 by means of bolts. The first and second attachment point 108, 109 each comprises means for detaching 110, 111 the part of the engine from the deformable beam 101 and thereby disabling the support device 317. The means for detaching 110, 111 is arranged between the part of the engine 318 and the deformable beam 101. Before detachment, the deformable beam 101 is supported by the part of the engine 318 so that the deformable beam 101 is effectively prevented from deforming along the deformation direction D in case of a collision. After detachment, the deformable beam can, due to the deformation notch 105, deform and thereby minimize the negative crash effects on the passengers, while utilizing a maximum of the available deformation distance. The part of the engine 318 may comprise one or several individual parts, as long as it provides for the supporting function which is required.

Between the first and second attachment point 108, 109 is a middle deformation zone 112 provided. The middle deformation zone 112 is positioned between a first and a second deformation zone 113, 114 arranged along the longitudinal axis A of the deformable beam 101. The deformation force required to deform the middle deformation zone 112 is, before detachment of the supporting part of the engine 318 via the means for detaching 110, 111 the first and second attachment point 108, 109, equal to or higher than the deformation force required to deform the first and the second deformation zone 113, 114. Although it might be possible that the middle deformation zone 112 requires lower deformation force, dependent on how the present invention is implemented on a beam structure.

An alternative embodiment of the present invention is shown in figure 5. A deformable beam 101 is shown with a deformation notch 105. A support device 417 in the form of a metal sheet 418 is attached to the deformable beam 101 at a first and a second attachment point 108, 109 by means of bolts comprising pyrotechnical charges. The metal sheet 418 extends across the deformation notch 105 so that the metal sheet 418 supports the deformable beam 101. The support device 417 makes the deformable beam 101 at least equally rigid in the area between the first and second attachment point 108, 109 as at other points along the longitudinal axis A. In this embodiment of the present invention, the means for disabling 110, 111 the support device 417 are pyrotechnical charges which are connected to a collision sensor system. If the collision sensor system determines that the support device needs to be disabled, a firing signal is communicated to the pyrotechnical charges. As a response to that signal the pyrotechnical charges fires and thereby disables the support device.

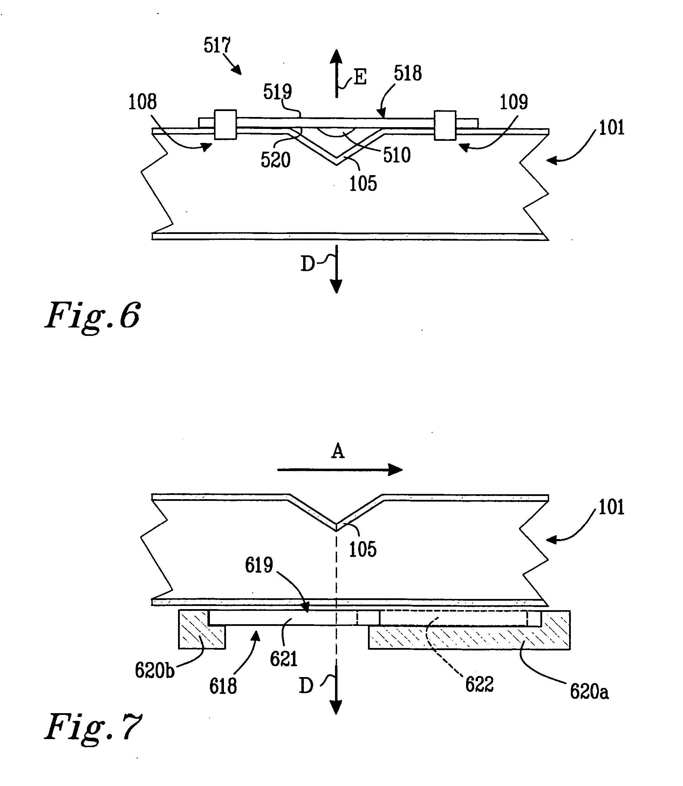

In figure 6 an embodiment of the present invention is shown having a deformable beam 101 with a weak point in the form of a deformation notch 105. A support device 517 in the form of a metal sheet 518 is attached to the deformable beam 101 at a first and a second attachment point 108, 109 by means of welding lines. The welding lines extend in the proximity of least a part of the periphery of the metal sheet 518, although they do not cross the deformation notch 105. The metal sheet 518 comprises a first and a second side 519, 520, wherein the second side 520 is arranged adjacent the deformable beam 101 and the deformation notch 105.

Means for disabling the support device 510 is arranged on the second side 520 of the metal sheet 518 and comprises, in the shown embodiment of the present invention, a pyrotechnical charge comprising a shaped charge, which is designed to explode in a predetermined explosion direction E. The explosion direction E is substantially perpendicular to the deformable beam 101 and the first side 519 of the metal sheet 518 and opposite to the deformation direction D. The pyrotechnical charge 510 will when firing rip a hole in the metal sheet 518 which is large enough to disable the support device 517, although parts of the support device 517 are still attached to the deformable beam 101. The supporting device is thereby effectively disabled without any negative effects on the deformable beam itself.

Another embodiment of the present invention is shown in figure 7. In figure 7, a deformable beam 101 comprising a weak point in the form of a deformation notch 105 is arranged with a supporting device 618. The supporting device 618, in the shown embodiment of the present invention, comprises a movable steel bar 619 which has a longitudinal extension. The movable steel bar 619 is arranged along the longitudinal axis A of the deformable beam 101 and intersects with the deformation direction D so as to block and thereby prevent the deformable beam 101 from deforming. A bar housing 620a and a bar support member 620b is arranged in working cooperation with the movable steel bar 619. The bar housing 620a and a bar support member 620b may be firmly attached to the deformable beam structure but might also be firmly attached to any other part of the vehicle which might serve as an appropriate attachment point. As long as the movable steel bar 619 is arranged to intersect the deformation direction D, the deformable beam is effectively prevented from deforming. The bar housing 620 is arranged with an electrical motor (not shown) which can move the movable steel bar 619 between a first and a second position 621, 622 (the second position 622 of the movable steel bar 619 is indicated with a dotted line in figure 7). When the movable steel bar 619 is in its first position, the deformation direction D is effectively blocked by the intersecting movable steel bar 619. However, at a given signal to the electrical motor from a collision sensor system, the movable steel bar 619 can be moved away from the deformation direction D, and the deformation notch 105, to the movable steel bar 619 second position 622. The movable steel bar 619 is moved along the longitudinal axis A. In the second position 622 the deformable beam 101 is free to deform at the deformation notch 105. The means for disabling the support device 618 is, in the shown embodiment of the present invention, comprising of the electrical motor which can move the movable steel bar 619.

Instead of using an electrical motor to move the movable steel bar 619, a pyrotechnical charge can be used to shoot the movable steel bar 619 to the mentioned second position 622. Alternatively, the movable steel bar 619 can be rotated away by the electrical motor.

As previously mentioned, the supporting device can be attached to the deformable beam 101, at at least one attachment point, preferably a plurality of attachment points. The means for disabling the support device, so as to remove the function of the support device from the deformable beam and thereby permit the deformable beam to deform along the deformation direction D, can comprise a number of different means. As described, pyrotechnical charges e.g. pyrotechnical bolts can be used. These are well known in the art, e.g. from US 2004/032149 or US 6,113,178, and will not be described further. An electrical motor can be used to disable the support device, as described in the text to figure 7. Other means which can be used to disable the support device may comprise fastening means arranged with an electrical heating element which heats the fastening means so that the fastening means is disabled. Alternatively a liquid nitrogen container can be used to spray liquid nitrogen onto the supporting device or onto the fastening means by which the supporting device is arranged on the deformable beam, so as to disable the supporting device.

The weak point 105 can comprise or consist of an embossing in the deformable beam, a geometrical change of the deformable beam, a hole, or a decrease in the cross section, or combinations thereof. The deformation behaviour of the weak points, such as those described earlier, are easy to predict. Hence the deformation becomes very easy to control during the collision.

As mentioned earlier and as illustrated in figure 1, the rigidity of the deformable beam can be changed as a function of the collision sensor system at at least one point along said longitudinal axis A. It is of course well within the boundaries of the present invention that a deformable beam comprises at least two weak points arranged with at least two supporting devices. The present invention further relates to a method for providing a vehicle with a controlled deformation during a collision. As mentioned earlier, generally a crumple deformation of a beam will absorb a high amount of energy during a collision and permit a low intrusion of the colliding object into a vehicle, while a buckle deformation of a beam will generally absorb a relatively small amount of energy and permit for a longer intrusion of the colliding object into a vehicle. The present invention provides a method which utilizes both these deformation types in order to provide for a controlled deformation during collision. The following examples will be described utilizing a beam structure as shown in figure 3, comprising a first and a second deformable beam according to the present invention.

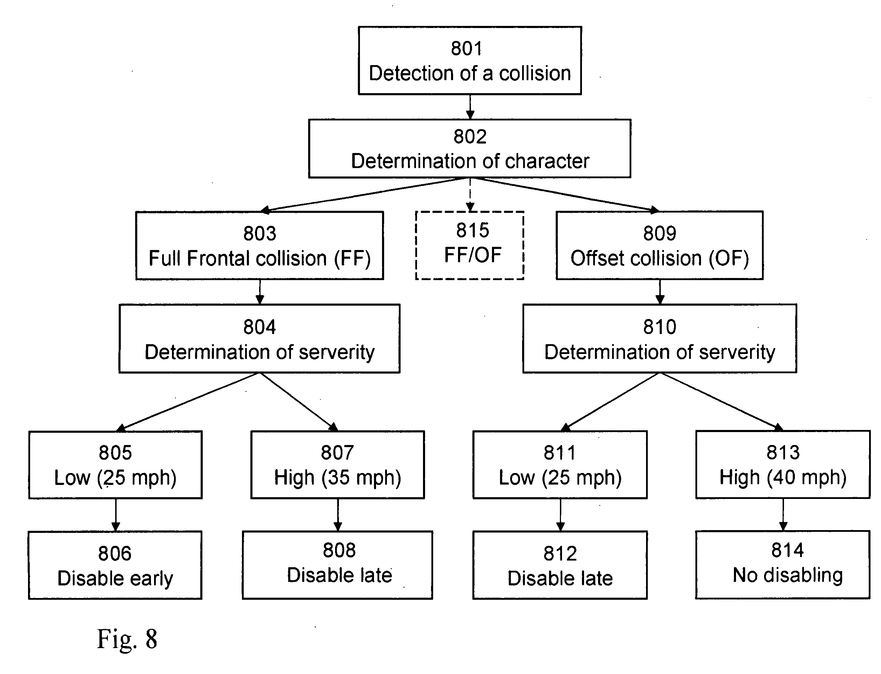

As is shown in the flow chart of figure 8, the first step is to detect whether or not a collision is imminent or occurring. Secondly, the character of the collision needs to be determined. These steps are preferably performed by a control unit such as a vehicle computer connected to e.g. a gyro, a retardation speed sensor, a laser distance sensor, photocell sensor, etc, or combinations thereof. A collision sensor system which can be employed when practising the present invention is described in the publications of WO 98/22327 and WO 01/85527. The vehicle computer, based on the signals from at least one sensor, determines the collision speed (i.e. the delta speed), determines the position of the collision point, compares the calculated values with programmed values, and if necessary sends signals to initiate the change in rigidity of the deformable beam. If the collision is determined as being a frontal collision with a sufficient degree of severity, the supporting device is disabled so that the deformable beam can deform at the deformation notch. Further in figure 8, the box indicated as 801 represents the at least one sensor arranged to detect a collision. The sensor is in communication with the vehicle computer, which interprets and analyses the signal from the sensor, represented by box 802. Depending on the result of the analysis, the computer makes a decision whether to classify the result as a full frontal collision 803 (FF), an offset collision 809 (OF) or as a collision which falls between these two collision types 815 (FF/OF), indicated by the dotted lines. The character of the collision is in this way determined. In other embodiments of the present invention, the sensor may be arranged to detect rear collisions, side collisions or other types of collisions. However for simplicity, the present invention is described with the aid of a front beam structure and a full frontal collision scenario and an offset collision scenario although, as mentioned, other collision characteristics are possible.

After the type of the collision has been determined, the severity of the collision is determined 804, 810. The severity of the collision is determined by the input from the different sensors and by comparing the input signals with pre-programmed values in the vehicle computer. The determination of the severity can as an example be based on the weight of the vehicle and the speed of the vehicle just before collision, the relative velocity of the vehicle and the colliding object (delta speed), the time it takes for a colliding object to reach a specified point of the chassis, the intrusion distance of the colliding object, the triggering of a certain combination of sensors, the powertrain of the vehicle, the passengers seat position, driving direction of the vehicle, passenger information such as weight of the passenger, status of safety belts, or the like.

In cases where a full frontal collision 803 is revealed, the computer determines whether the severity of the collision is to be identified as low or high 805, 807. If the severity is determined as high 807, e.g. by means of the delta speed equal to 35 mph, the computer determines that a late disabling is required. The just mentioned collision situation is typical for a USNCAP collision test. Before the supporting device is disabled, the beam structure and both the first and the second deformable beam, will be exposed to a crumple deformation, in this case at the beginning of the collision. When the support device is disabled, a buckle deformation will be initiated, in this case at a later stage during the collision, preferably just before the vehicle stops. Such collision will expose the beam structure to a medium collision force and a medium pulse. Since both the first and the second deformable beams will be engaged, the intrusion risk is not high. The support device is disabled at a precise point in time which permits the beam structure and the deformable beams to absorb a maximum amount of energy but at the same time provide a safe retardation of the vehicle. Generally during a full frontal collision, intrusion of the colliding object is not a high risk factor. Instead the crash pulse imparted by the collision is a significantly factor for imparting injuries to the passengers. Due to the present invention, a low crash pulse is achieved, which will significantly reduce the negative effects from the crash on any passenger present in the vehicle.

If a full frontal collision 803 is revealed and the severity is determined 804 to be low, for instance by means of the speed of the vehicle being equal to 25 mph, the computer initiates an early disabling 806 of the supporting device. At this kind of collision, i.e. with low severity and a full frontal collision, and since both the first and the second deformable beams will be engaged, the intrusion risk is low. The beam structure is exposed to a low force and a low pulse. The deformable beams will exhibit small crumple and a majority of buckle.

In cases where an offset collision 809 is revealed, one single deformable beam is intended to absorb substantially the same amount of kinetic energy as both the deformable beams would during a frontal collision, as described above. The crash severity in this kind of collision is generally high. In these cases the intrusion risk is very high, due to the high force imparted on one deformable beam. Much crumple and no buckle of the deformable beam is desirable. If the crash severity is determined to be high, e.g. by means of the delta speed of the vehicle being equal to (or higher than) 40 mph, the supporting device is not disabled 814, hence the deformable beam is not permitted to deform at the weak point. The just mentioned collision situation is typical for a EuroNCAP collision test. A large amount of energy can be absorbed by the deformable beam while still offering protection from long intrusion of the colliding object.

If the severity is determined 810 to be low 811, the disabling of the supporting device is initiated late 812 so as to permit a reasonable crumple of the deformable beam and some buckle at the end of the collision sequence.

## Claims

1. A beam structure in a vehicle for providing a controlled deformation during a collision, said beam structure (100) comprising at least one deformable beam (101, 102, 701) comprising a longitudinal axis (A), said beam structure (100) being provided with means for changing the rigidity of said at least one deformable beam (101, 102, 701) at at least one point along said longitudinal axis (A) in response to a signal from a collision sensor system (11, 12),
said deformable beam (101, 102, 701) comprising at least one weak point (105, 106, 705) at which said deformable beam (101, 102, 701) can deform along a deformation direction (D) upon collision, said the at least one weak point being located at said at least one point,
***characterized in***
**that** said means for changing the rigidity comprises a support device (317, 417, 517, 618) arranged so as to prevent said deformable beam (101, 102, 701) from deforming in said deformation direction (D) at said weak point (105, 106, 705), wherein said rigidity of said deformable beam (101, 102, 701) is changed by means for disabling (110, 111, 510) said support device (317, 417, 517, 617) so that said deformable beam (101, 102, 701) can deform at said weak point (105, 106, 705) during a collision.

2. The beam structure according to claim 1, **characterized in that** said support device (317, 417, 517) is attached to said deformable beam (101, 102, 701) at at least one first attachment point (108).

3. The beam structure according to claim 2, **characterized in that** said support device (317, 417, 517) being attached to said deformable beam (101, 102, 701) at at least a second attachment point (108, 109), wherein said weak point (105, 106, 705) is arranged between said first and second attachment point (108, 109).

4. The beam structure according to claim 2 or 3, **characterized in that** said means for disabling (110, 111, 510) said support device (318; 418, 518) from said deformation direction (D) comprises detachment means (110, 111) arranged at said first and/or said second attachment point (108, 109).

5. The beam structure according to claim 4, **characterized in that** said detachment means (110, 111) comprises chemical, electrical, mechanical or thermal means.

6. The beam structure according to claim 5, **characterized in that** said detachment means (110, 111) comprises at least one pyrotechnical charge.

7. The beam structure according to claim 6, **characterized in that** said at least one pyrotechnical charge is arranged between said deformable beam (101, 102, 701) and said supporting device (318, 418, 518).

8. The beam structure according to any preceding claim, **characterised in** said that said support device (317, 417, 517, 618) is positioned on said deformable beam (101, 102, 701) on a side opposite to said deformation direction (D), so as to substantially prevent said deformable beam (101, 102, 701) from deforming in said deformation direction (D).

9. The beam structure according to any of claims 1-7, **characterised in** said that said support device (317, 417, 517, 618) is positioned to intersect said deformation direction (D), so as to substantially prevent said deformation beam (101, 102, 701) from deforming in said deformation direction (D).

10. The beam structure according to any preceding claim, **characterised in that** said deformation direction (D) is substantially perpendicular to said longitudinal axis A.

11. The beam structure according to any preceding claim, **characterised in that** said weak point (105, 106, 705) is a deformation notch.

12. The beam structure according to claim 11, **characterised in that** said deformation notch (105, 106, 705) and said deformable beam (101, 102, 701) are arranged to form a buckle deformation.

13. The beam structure according to any preceding claim, **characterised in that** said weak point (105, 106, 705) comprises at least one of the following types of notches; an embossing, a hole, a reduction in the cross section, or combinations thereof.

14. The beam structure according to claim 1 or any of claims 8-13, **characterised in that** said support device (618) comprises at least one movable support beam (619) distinct from the deformable beam (101, 102, 701).

15. The beam structure according to claim 14, **characterised in that** said movable support beam (619) is operable between a first and a second position (621, 622), wherein when said movable support beam is in said fist position (621) said deformable beam (101, 102, 701) is effectively prevented from deforming, and when said movable support beam (619) is in said second position (622), said deformable beam (101, 102, 701) is substantially permitted to deform, along the deformation direction (D).

16. The beam structure according to any of claims 1 to 15, **characterized in that** said support device (317) is at least one part of an engine (318).

17. The beam structure according to any of claims 1 to 15, **characterised in that** said support device (417) is a metal sheet (418).

18. Vehicle comprising a beam structure according to any of claims 1-17, **characterized in that** said vehicle comprises at least two said deformable beams (101, 102, 701).

19. Vehicle comprising a beam structure according to claim 18, **characterized in that** said beam structure (100) is a front beam structure of said vehicle.

20. Vehicle comprising a beam structure according to claim 19, **characterized in that** said deformable beam (101, 102) is a side member of said front beam structure.

21. Vehicle comprising a beam structure according to any of claims 18-20, **characterized in that** the vehicle (10) is a car.

22. Method for controlling a deformation of a vehicle during a collision, said vehicle comprising the beam structure according to any of the claims 1-17, said method comprising the steps of;
a) detecting a collision or an imminent collision,
b) determining the character of the detected collision,
c) dependent upon the character in (b), disabling said support device so that the rigidity of the deformable beam is changed.

23. The method according to claim 22, **characterized in that** step (b) further comprises the step of determining the severity of the collision and **in that** step c) further depends on the severity in step b).

24. The method according to any of claims 22-23, **characterized in that** said support device is disabled at a determined point in time after the collision has been detected.

25. The method according to any of claims 22-24, **characterized in that** said support device is disabled at a determined level of retardation.

26. The method according to any of claims 22-25, **characterized in that** said support device is disabled at a determined delta speed of said vehicle.

27. The method according to any of claims 22-26, **characterized in that** said support device is disabled at a determined intrusion distance of the colliding object.

28. The method according to any of claims 22-27, **characterized in that** said support device is disabled at a determined available deformation distance.

29. The method according to any of claims 22-28, **characterized in that** said support device is disabled dependent on a combination of at least two of the parameters mentioned in claims 24-28.

30. The method according to any of claims 22-28, **characterized in that** said support device is disabled dependent on at least two different parameters.

## Patentansprüche

1. Eine Trägerstruktur in einem Fahrzeug zur Bildung einer gesteuerten Deformation während eines Zusammenstoßes, wobei die Trägerstruktur (100) mindestens einen deformierbaren Träger (101, 102, 701) umfasst, der eine längsgerichtete Achse (A) umfasst, wobei die Trägerstruktur (100) mit Mitteln zum Ändern der Steifigkeit des mindestens einen deformierbaren Trägers (101, 102, 701) an mindestens einem Punkt entlang der längsgerichteten Achse (A) als Reaktion auf ein Signal von einem Kollisionssensorsystem (11, 12) ausgestattet ist, wobei der deformierbare Träger (101, 102, 701) mindestens einen Schwachpunkt (105, 106, 705) umfasst, an weichem der deformierbare Träger (101, 102, 701) im Zuge eines Zusammenstoßes entlang einer Deformationsrichtung (D) deformiert werden kann, wobei sich der Schwachpunkt an mindestens einem Punkt befindet,
**dadurch gekennzeichnet, dass** das Mittel zum Ändern der Steifigkeit eine Trägervorrichtung (317, 417, 517, 618) umfasst, die so ausgelegt ist, dass sie den deformierbaren Träger (101, 102, 701) am Deformieren in der Deformationsrichtung (D) an dem Schwachpunkt (105, 106, 705) hindert, wobei die Steifigkeit des deformierbaren Trägers (101, 102, 701) durch Mittel zur Deaktivierung (110, 111, 510) der Trägervorrichtung (317, 417, 517, 617) verändert wird, so dass sich der deformierbare Träger (101, 102, 701) an dem Schwachpunkt (105, 105, 705) im Zuge eines Zusammenstoßes deformieren kann.

2. Trägerstruktur nach Anspruch 1, **dadurch gekennzeichnet, dass** die Trägervorrichtung (317, 417, 517) an mindestens einem ersten Verbindungspunkt (108) an dem deformierbaren Träger (101, 102, 701) angebracht ist.

3. Trägerstruktur nach Anspruch 2, **dadurch gekennzeichnet, dass** die Trägervorrichtung (317, 417, 517) an mindestens einem zweiten Verbindungspunkt (108, 109) an dem deformierbaren Träger (101, 102, 701) angebracht ist, wobei der Schwachpunkt (105, 106, 705) zwischen dem ersten und dem zweiten Verbindungspunkt (108, 109) angeordnet ist.

4. Trägerstruktur nach Anspruch 2 oder 3, **dadurch gekennzeichnet, dass** das Mittel zur Deaktivierung (110, 111, 510) der Trägervorrichtung (318, 418, 518) gegen die Deformationsrichtung (D) Abkoppelungsmittel (110, 111) umfasst, die an dem ersten und / oder dem zweiten Verbindungspunkt (108, 109) angeordnet sind.

5. Trägerstruktur nach Anspruch 4, **dadurch gekennzeichnet, dass** das Mittel zur Abkoppelung (110, 111) chemische, elektrische, mechanische oderthermische Mittel umfasst.

6. Trägerstruktur nach Anspruch 5, **dadurch gekennzeichnet, dass** das Mittel zur Abkoppelung (110, 111) wenigstens eine pyrotechnische Ladung umfasst.

7. Trägerstruktur nach Anspruch 6, **dadurch gekennzeichnet, dass** mindestens eine pyrotechnische Ladung zwischen dem deformierbaren Träger (101, 102, 701) und der Trägervorrichtung (318, 418, 518) angeordnet ist.

8. Trägerstruktur nach einem der vorangehenden Ansprüche, **dadurch gekennzeichnet, dass** die Trägervorrichtung (317, 417, 517, 618) an einer der Deformationsrichtung (D) entgegengesetzten Seite auf dem deformierbaren Träger (101, 102, 701) angebracht ist, um so im wesentlichen die Deformation des deformierbaren Trägers (101, 102, 701) in die Deformationsrichtung (D) zu verhindern.

9. Trägerstruktur nach einem der Ansprüche 1 bis 7, **dadurch gekennzeichnet, dass** die Trägervorrichtung (317, 417, 517, 618) so angeordnet ist, dass sie die Deformationsrichtung (D) schneidet, um so im wesentlichen die Deformation des deformierbaren Trägers (101, 102, 701) in die Deformationsrichtung (D) zu verhindern.

10. Trägerstruktur nach einem der vorangehenden Ansprüche, **dadurch gekennzeichnet, dass** die Deformationsrichtung (D) im wesentlichen senkrecht zur längsgerichteten Achse A verläuft.

11. Trägerstruktur nach einem der vorangehenden Ansprüche, **dadurch gekennzeichnet, dass** der Schwachpunkt (105, 106, 705) eine Deformationskerbe ist.

12. Trägerstruktur nach Anspruch 11, **dadurch gekennzeichnet, dass** die Deformationskerbe (105, 106, 705) und der deformierbare Träger (101, 102, 701) so beschaffen sind, dass sie eine knickende Deformation bilden.

13. Trägerstruktur nach einem der vorangehenden Ansprüche, **dadurch gekennzeichnet, dass** der Schwachpunkt (105, 106, 705) mindestens einen der folgenden Typen von Kerben umfasst: eine Prägung, ein Loch, eine Reduzierung im Querschnitt oder Kombinationen davon.

14. Trägerstruktur nach Anspruch 1 oder einem der Ansprüche 8 bis 13, **dadurch gekennzeichnet, dass** die Trägervorrichtung (618) mindestens einen beweglichen, vom deformierbaren Träger (101, 102, 701) verschiedenen Unterstützungstrager (619) umfasst.

15. Trägerstruktur nach Anspruch 14, **dadurch gekennzeichnet, dass** der bewegliche Unterstützungsträger (619) zwischen einer ersten und einer zweiten Position (621, 622) betätigt werden kann, wobei der deformierbare Träger (101, 102, 701) tatsächlich daran gehindert wird, sich zu deformieren, wenn sich der bewegliche Unterstützungsträger in der ersten Position (621) befindet, und dem deformierbare Träger (101, 102, 701) im wesentlichen ermöglicht wird, sich entlang der Deformationsrichtung (D) zu deformieren, wenn sich der bewegliche Unterstützungsträger (619) in der zweiten Position (622) befindet.

16. Trägerstruktur nach einem der Ansprüche 1 bis 15, **dadurch gekennzeichnet, dass** die Trägervorrichtung (317) mindestens ein Teil von einem Motor (318) ist.

17. Trägerstruktur nach einem der Ansprüche 1 bis 15, **dadurch gekennzeichnet, dass** die Trägervorrichtung (417) ein Metallblech (418) ist.

18. Fahrzeug, umfassend eine Trägerstruktur nach einem der Ansprüche 1 bis 17, **dadurch gekennzeichnet, dass** das Fahrzeug mindestens zwei deformierbare Träger (101, 102, 701) umfasst.

19. Fahrzeug, umfassend eine Trägerstruktur nach Anspruch 18, **dadurch gekennzeichnet, dass** die Trägerstruktur (100) eine Vorderfront-Trägerstruktur des Fahrzeugs ist.

20. Fahrzeug, umfassend eine Trägerstruktur nach Anspruch 19, **dadurch gekennzeichnet, dass** der deformierbare Träger (101, 102) ein seitliches Bauteil der Vorderfront-Trägerstruktur ist.

21. Fahrzeug, umfassend eine Trägerstruktur nach einem der Ansprüche 18 bis 20, **dadurch gekennzeichnet, dass** das Fahrzeug (10) ein Auto ist.

22. Verfahren zum Steuern der Deformation eines Fahrzeugs während eines Zusammenstoßes, wobei das Fahrzeug die Trägerstruktur nach einem der Ansprüche 1 bis 17 umfasst, wobei das Verfahren folgende Schritte umfasst:
a) Erkennen eines Zusammenstoßes oder eines unmittelbar bevorstehenden Zusammenstoßes,
b) Feststellen der Eigenschaften des erkannten Zusammenstoßes,
c) Abhängig von der Eigenschaft in b), Deaktivieren der Trägervorrichtung, so dass die Steifigkeit des deformierbaren Trägers verändert wird.

23. Verfahren nach Anspruch 22, **dadurch gekennzeichnet, dass** der Schritt b) des weiteren den Schritt der Feststellung der Schwere des Zusammenstoßes umfasst und **dadurch**, dass der Schritt c) des weiteren von der Schwere in Schritt b) abhängt.

24. Verfahren nach einem der Ansprüche 22 bis 23, **dadurch gekennzeichnet, dass** die Trägervorrichtung zu einem festgelegten Zeitpunkt, nachdem der Zusammenstoß erkannt wurde, deaktiviert wird.

25. Verfahren nach einem der Ansprüche 22 bis 24, **dadurch gekennzeichnet, dass** die Trägervorrichtung mit einem bestimmten Grad an Verzögerung deaktiviert wird.

26. Verfahren nach einem der Ansprüche 22 bis 25, **dadurch gekennzeichnet, dass** die Trägervorrichtung bei einem bestimmten Geschwindigkeits-Delta des Fahrzeugs deaktiviert wird.

27. Verfahren nach einem der Ansprüche 22 bis 26, **dadurch gekennzeichnet, dass** die Trägervorrichtung bei einer bestimmten Eindringstrecke des kollidierenden Objekts deaktiviert wird.

28. Verfahren nach einem der Ansprüche 22 bis 27, **dadurch gekennzeichnet, dass** die Trägervorrichtung bei einem bestimmten verfügbaren Abstand der Deformation deaktiviert wird.

29. Verfahren nach einem der Ansprüche 22 bis 28, **dadurch gekennzeichnet, dass** die Trägervorrichtung abhängig von einer Kombination aus wenigstens zwei der in den Ansprüchen 24 bis 28 genannten Parameter deaktiviert wird.

30. Verfahren nach einem der Ansprüche 22 bis 28, **dadurch gekennzeichnet, dass** die Trägervorrichtung abhängig von mindestens zwei verschiedenen Parametern deaktiviert wird.

## Revendications

1. Structure de poutres pour un véhicule, destinée à offrir une déformation contrôlée lors d'une collision, ladite structure (100) de poutres comprenant au moins une poutre déformable (101, 102, 701) comprenant un axe longitudinal (A), ladite structure (100) de poutres étant pourvue de moyens pour modifier la rigité de ladite au moins une poutre déformable (101, 102, 701) en au moins un point dudit axe longitudinal (A) en réponse à un signal provenant d'un système (11, 12) détecteur de collision, ladite poutre déformable (101, 102, 701) comprenant au moins un point faible (105, 106, 705) au niveau duquel ladite poutre déformable (101, 102, 701) peut se déformer le long d'une direction de déformation (D) lors d'une collision, ledit au moins un point faible étant situé sur ledit au moins un point,
***caractérisé en ce que*** lesdits moyens pour modifier la rigidité comprennent un dispositif de support (317, 417, 517, 618) prévu pour empêcher ladite poutre déformable (101, 102, 701) de se déformer dans ladite direction de déformation (D) au niveau dudit point faible (105, 106, 705), ladite rigidité de ladite poutre déformable (101, 102, 701) étant modifiée par des moyens de désactivation (110, 111, 510) dudit dispositif de support (317, 417, 517, 618) de façon que ladite poutre déformable (101, 102, 701) puisse se déformer au niveau dudit point faible (105, 106, 705) lors d'une collision.

2. Structure de poutres selon la revendication 1, ***caractérisée en ce que*** ledit dispositif de support (317, 417, 517) est fixé à ladite poutre déformable (101, 102, 701) en au moins un premier point de fixation (108).

3. Structure de poutres selon la revendication 2, ***caractérisée en ce que*** ledit dispositif de support (317, 417, 517) est fixé à ladite poutre déformable (101, 102, 701) en au moins un deuxième point de fixation (108, 109), ledit point faible (105, 106, 705) étant placé entre ledit premier et ledit deuxième point de fixation (108, 109).

4. Structure de poutres selon la revendication 2 ou 3, ***caractérisée en ce que*** lesdits moyens pour désactiver (110, 111, 510) ledit dispositif de support (318 ; 418 ; 518) de ladite direction de déformation (D) comprend des moyens de séparation (110, 111) placés au niveau dudit premier et/ou dudit deuxième point(s) de fixation (108, 109).

5. Structure de poutres selon la revendication 4, ***caractérisée en ce que*** lesdits moyens de séparation (110, 111) comprennent des moyens chimiques, électriques, mécaniques ou thermiques.

6. Structure de poutres selon la revendication 5, ***caractérisée en ce que*** lesdits moyens de séparation (110, 111) comprennent au moins une charge pyrotechnique.

7. Structure de poutres selon la revendication 6, ***caractérisée en ce que*** ladite au moins une charge pyrotechnique est placée entre ladite poutre déformable (101, 102, 701) et ledit dispositif de support (318, 418, 518).

8. Structure de poutres selon l'une quelconque des revendications précédentes, ***caractérisée en ce que*** ledit dispositif de support (317, 417, 517, 618) est placé sur ladite poutre déformable (101, 102, 701) sur un côté opposé à ladite direction de déformation (D), de manière à empêcher substantiellement ladite poutre déformable (101, 102, 701) de se déformer dans ladite direction de déformation (D).

9. Structure de poutres selon l'une quelconque des revendications 1 à 7, ***caractérisée en ce que*** ledit dispositif de support (317, 417, 517, 618) est placé de façon à intersecter ladite direction de déformation (D), afin d'empêcher substantiellement ladite poutre déformable (101, 102, 701) de se déformer dans ladite direction de déformation (D).

10. Structure de poutres selon l'une quelconque des revendications précédentes, ***caractérisée en ce que*** ladite direction de déformation (D) est sensiblement perpendiculaire audit axe longitudinal A.

11. Structure de poutres selon l'une quelconque des revendications précédentes, ***caractérisée en ce que*** ledit point faible (105, 106, 705) est une échancrure de déformation.

12. Structure de poutres selon la revendication 11, ***caractérisée en ce que*** ladite échancrure de déformation (105, 106, 705) et ladite poutre déformable (101, 102, 701) sont agencées pour former une déformation de flambage.

13. Structure de poutres selon l'une quelconque des revendications précédentes, ***caractérisée en ce que*** ledit point faible (105, 106, 705) comprend au moins l'un des types d'échancrures suivants : un emboutissage, une cavité, une diminution de la section transversale, ou des combinaisons de ceux-ci.

14. Structure de poutres selon la revendication 1 ou selon l'une quelconque des revendications 8 à 13, ***caractérisée en ce que*** ledit dispositif de support (618) comprend au moins une poutre de support déplaçable (619) distincte de la poutre déformable (101, 102, 701).

15. Structure de poutres selon la revendication 14, ***caractérisée en ce que*** ladite poutre de support déplaçable (619) est utilisable entre une première et une deuxième position (621, 622), dans laquelle lorsque ladite poutre de support déplaçable est dans ladite première position (621), ladite poutre déformable (101, 102, 701) est efficacement empêchée de se déformer, et lorsque ladite poutre de support déplaçable (619) est dans ladite deuxième position (622), il est substantiellement permis à ladite poutre déformable (101, 102, 701) de se déformer le long de la direction de déformation (D).

16. Structure de poutres selon l'une quelconque des revendications 1 à 15, ***caractérisée en ce que*** ledit dispositif de support (317) est au moins une partie d'un moteur (318).

17. Structure de poutres selon l'une quelconque des revendications 1 à 15, ***caractérisée en ce que*** ledit dispositif de support (417) est une feuille métallique (418).

18. Véhicule comprenant une structure de poutres selon l'une quelconque des revendications 1 à 17, ***caractérisé en ce que*** ledit véhicule comprend au moins deux dites poutres déformables (101, 102, 701).

19. Véhicule comprenant une structure de poutres selon la revendication 18, ***caractérisé en ce que*** ladite structure (100) de poutres est une structure de poutres avant dudit véhicule.

20. Véhicule comprenant une structure de poutres selon la revendication 19, ***caractérisé en ce que*** ladite poutre déformable (101, 102) est un élément latéral de ladite structure de poutres avant.

21. Véhicule comprenant une structure de poutres selon l'une quelconque des revendications 18 à 20, ***caractérisé en ce que*** le véhicule (10) est une automobile.

22. Procédé de contrôle d'une déformation d'un véhicule lors d'une collision, ledit véhicule comprenant la structure de poutres selon l'une quelconque des revendications 1 à 17, ledit procédé comprenant les étapes consistant à :
a) détecter une collision ou une collision imminente,
b) déterminer le caractère de la collision détectée,
c) en fonction du caractère de (b), désactiver ledit dispositif de support afin que la rigidité de la poutre déformable soit modifiée.

23. Procédé selon la revendication 22, ***caractérisé en ce que*** l'étape (b) comprend de plus l'étape consistant à déterminer la sévérité de la collision, et ***en ce que*** l'étape (c) dépend en outre de la sévérité de l'étape (b).

24. Procédé selon l'une quelconque des revendications 22 à 23, ***caractérisé en ce que*** ledit dispositif de support est désactivé à un moment déterminé dans le temps après que la collision ait été détectée.

25. Procédé selon l'une quelconque des revendications 22 à 24, ***caractérisé en ce que*** ledit dispositif de support est désactivé à un niveau de décélération déterminé.

26. Procédé selon l'une quelconque des revendications 22 à 25, ***caractérisé en ce que*** ledit dispositif de support est désactivé à une vitesse delta déterminée dudit véhicule.

27. Procédé selon l'une quelconque des revendications 22 à 26, ***caractérisé en ce que*** ledit dispositif de support est désactivé à une distance d'intrusion déterminée de l'objet entrant en collision.

28. Procédé selon l'une quelconque des revendications 22 à 27, ***caractérisé en ce que*** ledit dispositif de support est désactivé à une distance de déformation disponible déterminée.

29. Procédé selon l'une quelconque des revendications 22 à 28, ***caractérisé en ce que*** ledit dispositif de support est désactivé en dépendance d'une combinaison d'au moins deux des paramètres mentionnés dans les revendications 24 à 28.

30. Procédé selon l'une quelconque des revendications 22 à 28, ***caractérisé en ce que*** ledit dispositif de support est désactivé en dépendance d'au moins deux paramètres différents.
